# EUROPEAN PATENT APPLICATION

(11) **EP 3 064 058 A1**
(43) Date of publication of application: **07.09.2016**
(21) Application number: 15158121.2
(22) Date of filing: 06.03.2015
(51) Int. Cl.: A01K 1/015

(54) **Mats for slatted floors**

(71) Applicant: Earls, Michael, Athenry, County Galway (IE)
(72) Inventor: Earls, Michael, Athenry, County Galway (IE)
(74) Representative: Brophy, David Timothy

(57) **Abstract**

A mat (20) for overlaying one or more elongate slats (16) of a slatted floor (10) of an animal house has an upper surface (34) to bear the weight of an animal and a lower surface for overlaying the slatted floor. A plurality of edges (28) run along a lengthwise direction defined in use by the elongate direction of a slat on which the mat is to be laid. The upper surface comprises a plurality of upper surface segments (36) disposed at intervals along the lengthwise direction, and a plurality of drainage channels (38) are provided between adjacent upper surface segments. The drainage channels are open to the upper surface and slope downwardly towards an edge to assist in run-off of waste from the mat. The upper surface segments are provided with a convex profile such that waste is encouraged to drain from the convex upper surface profile via an edge of the mat either directly or via a drainage channel.

## Description

### Technical Field

This invention relates to mats for slatted floors, such as are found in buildings where animals are kept, e.g. cattle sheds.

### Background Art

Mats for slatted floors are well known, typically taking the form of either a single rubber strip or more commonly two or more rubber strips connected together and each dimensioned to overlay individual slats of the underlying floor, which is typically concrete. Between adjacent connected strips, and between adjacent edges of mats laying on adjacent slats, there is typically a gap allowing waste from the animals to run off the top surface and into a talk below the slatted floor.

A well-known example of such a mat is described in EP 1232687. This mat has a pair of parallel connected rubber strips or tiles, each having a top surface with a central ridge and sloped surfaces falling away from the ridge towards each elongate edge.

Such a mat works well, but there is a need to provide a mat which more efficiently drains the waste from the surface. This need is exacerbated by increasingly stringent environmental regulations designed to reduce ammonia emissions. Increasing the angle of the slope to encourage faster drainage can lead to injuries as the surface can be too uneven for animals to safely stand and walk on such a surface.

### Disclosure of the Invention

There is provided a mat for overlaying one or more elongate slats of a slatted floor of an animal house, the mat having an upper surface to bear the weight of an animal, a lower surface for overlaying the slatted floor, and a plurality of edges running along a lengthwise direction defined in use by a slat on which the mat is to be laid, wherein the upper surface comprises a plurality of upper surface segments disposed at intervals along said lengthwise direction, wherein a plurality of drainage channels are provided between adjacent upper surface segments, said drainage channels being open to said upper surface and sloping downwardly towards an edge to assist in run-off of waste from the mat, and wherein said upper surface segments are provided with a convex profile such that waste is encouraged to drain from the convex upper surface profile via an edge of the mat either directly or via a drainage channel.

In contrast to the mat of EP 1232687, the provision of drainage channels along the length of a mat's upper surface, i.e. along the length of a slat when in use, allows for an increased drainage area, by providing several areas to receive and dispose of waste. Additionally, as waste can fall either onto the surface of a segment, or directly into a drainage channel, a proportion of the waste falling onto the mat is immediately captured away from the parts of the surface on which an animal will stand.

Preferably, said upper surface segments are convex along one axis, to provide a vaulted or arcuate profile. In contrast to conventional mats with flat and sloped surfaces, it has been found that vaulted or arcuate surfaces provide acceptable run-off and increased safety and ease of footing for the animals.

Where the surface is arcuate or vaulted it is preferably vaulted along the direction perpendicular to the lengthwise direction. In certain embodiments, the profile of the upper surfaces of the segments is flat along the lengthwise direction.

Preferably, however, said upper surface segments are convex along a pair of generally orthogonal axes to provide a domed profile.

In this way, the waste can run off the arcuate slopes along the perpendicular direction, i.e. off the lengthwise edges, or can run off along the arcuate slopes in the lengthwise direction, i.e. falling into a drainage channel between adjacent surface segments, and from there it can drain out of the channel over the lengthwise edges. The preferred shape is that of a shallow dome, so in reality waste may drain in any direction from such a surface, including running to a corner, i.e. with both components of slope acting on it.

Preferably, the convex profile drops away from an apex to a mat edge with a fall of from 2mm to 50mm, more preferably from 4 to 40mm.

More preferably, the convex profile drops away from an apex to each of a pair of mat edges on opposed sides of the apex, with a fall on either side of from 2mm to 50mm, more preferably from 4 to 40mm.

Preferably, the convex profile drops away from an apex to a mat edge with the profile making an angle at the mat edge of between 4° and 20° from horizontal in use.

Preferably, the convex profile, when viewed in a section along the length of the mat, drops away from an apex to a transverse edge, and makes an angle at the mat edge of between 4° and 20° from horizontal in use, ignoring chamfering or rounding.

Preferably, the convex profile when viewed in a section across the width of a slat drops away from an apex to a longitudinal edge, and makes an angle at the mat edge of between 4° and 14° from horizontal in use, ignoring chamfering or rounding.

More preferably, the convex profile drops away from an apex to a mat edge with an aggregate fall of between 6% and 40%.

In preferred embodiments, said apex is disposed relatively centrally and the fall of e.g. 6% to 40% is calculated as the vertical drop off from apex to edge, as a proportion of the distance between the apex and the edge. In other words, the proportion is calculated, for a centrally located apex, as a proportion of a half rib width, or half dome length.

Preferably, the convex profile is sloped to drain away from an upper point of the segment in a plurality of directions, including towards at least one edge and towards at least one drainage channel.

Preferably, the average slope of the drainage channels alone is from 6° to 40°, preferably from 12 to 35°.

Preferably, the width of the drainage channels, along the lengthwise direction of the mat, is from 5mm to 50mm, preferably from 15mm to 40mm.

Preferably, the width of the upper surface segments measured, along the lengthwise direction of the mat, is from 5mm to 120mm, preferably from 18mm to 100mm.

Preferably, the ratio of the width of a drainage channel to that of an adjacent upper surface segment, measured along the lengthwise direction of the mat, lies in the range 1:1 to 1:6.

Preferably, said drainage channels extend between an upper point and a lower point when the mat is disposed in its use position, the upper points being at or below the topmost parts of the upper surface of the mat.

Preferably, the upper point of a drainage channel is located away from the edges of the mat and the drainage channel slopes downwardly away from said upper point in the direction of an edge, such that there is a pair of said lower points, each associated with a respective edge.

In certain embodiments, the mat has one or more internal edges defining a void, slot or hole through the mat, wherein at least a portion of said drainage channels have a lower point at said internal edge, and wherein the upper surface is separated by said void, slot or hole to have a plurality of upper surface segments on either side thereof.

A particular preferred format of mat is provided in the form of at least two parallel elongated panels each having elongated outer edges, the panels being connected to one another in a spaced-apart configuration so as to define at least one elongated slot defined by one or more internal edges separating said panels, the panels being configured to overlay parallel slats of an underlying slatted floor, and the slot being configured to overlay a gap between said parallel slats and to allow material to flow from an upper surface of the mat through said slot and into said gap to a void below the floor.

Preferably, the drainage channels of a mat extend substantially across the width of a panel of the mat defined between a pair of opposite mat edges.

Preferably, the mat further comprises at least one transverse projection projecting from an outer elongate edge, said transverse projection having a convex or sloped upper surface encouraging waste which lands on said upper surface to drain therefrom.

Such a projection may be positioned to lie on top of or to coincide with the position of an underlying transverse slat, rib or other structure extending between the slats of a slatted floor, upon which waste would tend to lodge and accumulate. The provision of a transverse projection with a sloped or convex (arcuate, domed) upper surface intercepts any such waste and encourages it to run off into the gap between slats.

There is also provided a mat for overlaying one or more elongate slats of a slatted floor of an animal house, the mat having at least one panel dimensioned to overlay a slat of said floor and defining a lengthwise direction parallel to said slat in use, said panel having an outer elongate edge running in the lengthwise direction which in use is positioned generally parallel to and along or outside a slat edge, the panel further comprising at least one transverse projection from said edge, said transverse projection having a convex or sloped upper surface encouraging waste which lands on said upper surface to drain therefrom.

Preferably, said transverse projection extends outwardly from the edge of the mat by a distance of approximately half the distance between the adjacent outer edges of a pair of such mats when positioned on respective adjacent slats, whereby when a pair of such transverse projections are abutting or nearly abutting, the pair of projections present a continuous or near-continuous upper surface encouraging drainage of waste.

Preferably, said transverse projection extends outwardly from the edge of the mat by a distance of approximately 8 mm to 25 mm.

Preferably, a plurality of transverse projections are provided along said outer elongate edge, the projections being distributed along the edge such that, in use, they each overlay a respective one of a plurality of crossbeams supporting said slatted floor.

The invention further provides a slatted floor comprising a plurality of transverse cross members below a plurality of lengthwise slats, and at least one mat according to claim 24, wherein each of said projections overlies a respective cross member.

Preferably, for such a floor, a pair of said mats are disposed, with adjacent outer edges being disposed along adjacent slat edges, whereby a cross member revealed between said adjacent slat edges is protected by abutting or nearly-abutting projections from each mat.

### Brief description of the Drawings

The invention will now be further described with reference to the following description of embodiments thereof, given by way of example only, with reference to the accompanying drawings, in which:
Fig. 1 is a perspective view o0f a slatted floor;
Figs. 2 and 3 are enlarged details of Fig. 1;
Fig. 4 is a perspective view of the mat shown in Fig. 1;
Fig. 5 is a perspective view of a further mat;
Fig. 6 is a perspective view of a further mat;
Figs. 7 and 8 are perspective views from above and below respectively of a further mat;
Fig. 9 is a plan view from below of the mat of Figs. 7 and 8;
Fig. 10 is a section through the mat of Figs. 7 and 8, taken along the line G-G in Fig. 9;
Fig. 11 is a section through the mat of Figs. 7 and 8, taken along the line H-H in Fig. 10;
Fig. 12 is an enlarged detail of the mat of Figs. 7 and 8, taken at the circle J in Fig. 9;
Fig. 13 is a section through the mat of Figs. 7 and 8, taken along the line K-K in Fig. 12;
Fig. 14 is a perspective view of a further mat;
Fig. 15 is a perspective view of a further mat;
Fig. 16 is a plan view from above of the mat of Fig. 15;
Figs. 17 and 18 are sections through an upper surface segment and a drainage channel, respectively, of the mat of Fig. 15;
Fig. 19 is a perspective view of a further mat;
Fig. 20 is a perspective view of a slatted floor shown without any mats in place;
Figs. 21 and 22 are perspective views from above and below respectively of a further mat;
Fig. 23 is a plan view from above of a detail of a further mat;
Figs. 24-26 are sections through the detail of the mat of Fig. 23, taken respectively along the lines A-A, B-B and C-C;
Fig. 27 is a perspective view of a detail of a further mat;
Fig. 28 is a plan view of the detail of the mat of Fig. 27;
Fig. 29 is an end elevation of the detail of the mat of Fig. 27
Fig. 30 is a side elevation of the detail of the mat of Fig. 27;
Fig. 31 is a side elevation of a detail of a further mat, in a similar view to Fig. 30;
Fig. 32 is a perspective view of a detail of a further mat;
Fig. 33 is a plan view of the detail of the mat of Fig. 32;
Fig. 34 is a transverse section though the detail of the mat of Fig. 32, taken along the line A-A in Fig. 33;
Fig. 35 is an end elevation of the detail of Fig. 32;
Fig. 36 is a side elevation of the detail of Fig. 32;

### Detailed Description of Preferred Embodiments

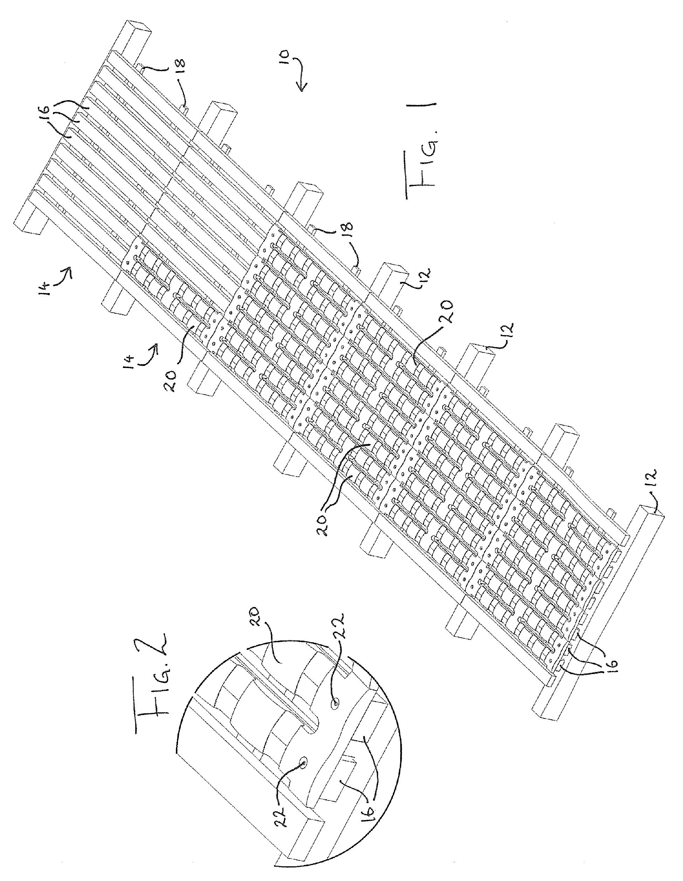

In Fig. 1 there is indicted, generally at 10, a slotted floor. A series of regularly spaced underfloor concrete beams 12 run in a transverse direction (as the term is to be understood in the following description of embodiments) and the gaps between these beams are bridged by slatted floor sections 14 which are laid end-to-end in longitudinal direction (as the term is to be understood in the following description of embodiments), perpendicular to the underfloor beams 12. Each slatted floor section 14 is made up of a plurality of elongate concrete or wooden slats 16 tied together by transverse tie members 18. While Fig. 1 shows a single row of adjoining slatted floor sections 14 laid end-to-end across a series of underfloor beams, it will be appreciated that the slatted floor sections would typically be extended as necessary on both the longitudinal and transverse directions to whatever extent was required.

In known manner, a plurality of rubber mats 20 is overlaid on the slats 16. Each mat is dimensioned to overlay a pair of adjacent slats 16, and the mats 20 are tiled in both the transverse and longitudinal directions in order to fully cover the area of the floor where animals will walk and rest. As seen in greater detail in Fig 2, the mat is provided with suitable fasteners 22 to secure it to the underlying slats 16.

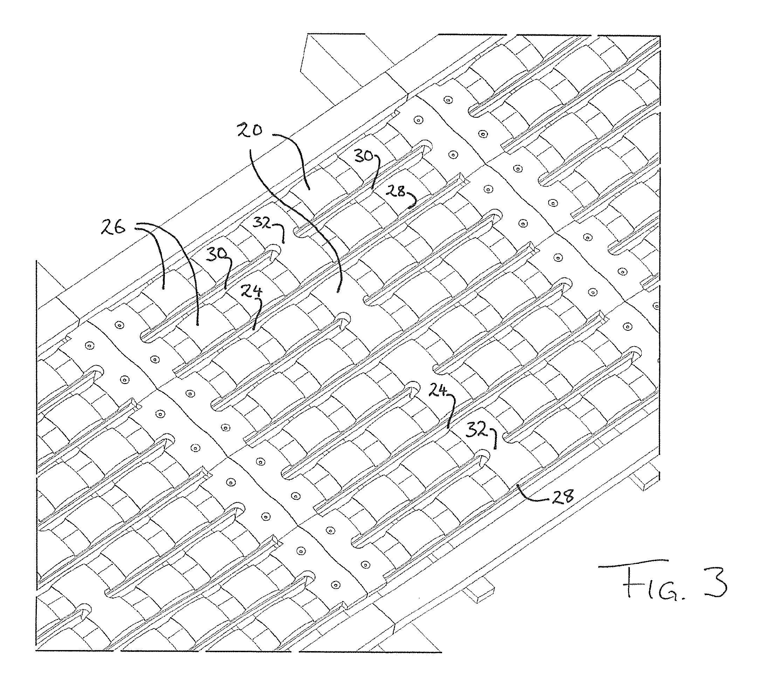

Fig 3 shows the floor in an enlarged detail, illustrating the tiling arrangement. It will be observed that the space between each pair of transversely adjacent mats defines a gap 24, which can be seen, with reference to Fig 1, to overlay a gap between underlying slats 16. Furthermore, each mat 20 is formed of a pair of parallel, elongated panels 26, wherein the elongated outer edges 28 of the panels 26 define the sides of the gap 24 between adjacent mats.

Additionally, each mat has a pair of internal elongated holes or slots 30 defined by internal edges of the panels 26. It can be seen that the pair of slots 30 are separated by a bridging portion 32 between the two panels, to provide additional structural strength to the mat. It will be appreciated that a continuous slot 30 could be provided along substantially the entire length of the panels 26, or the slots could be further sub-divided, as desired. The purpose of the slots 30 and the gaps 24 is to allow waste from the animals to drain into a space under the slatted floor 10.

Increasingly stringent environmental standards dictate that waste should drain quickly to reduce ammonia levels. In any event, for reasons of hygiene and safety it is preferable that the surface of the mats be as clean as possible and while it is possible to employ expensive scraper systems, or to manually clean the mats, it is desirable that the design of the mats inherently encourages good drainage.

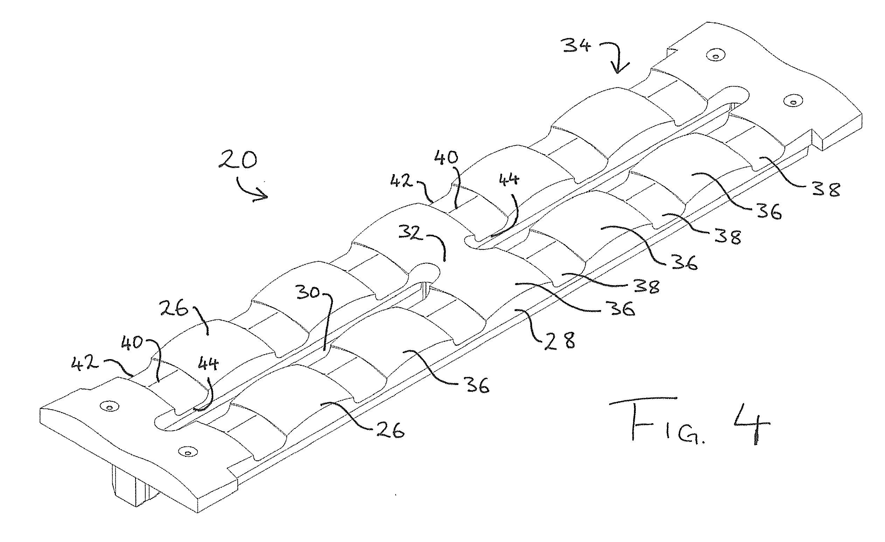

Therefore, referring to Fig 4, which shows a mat 20 in more detail, the upper surface 34 of the mat has a series of upper surface segments 36 disposed at intervals along the length of a panel 26, and the upper surface segments 36 alternate with drainage channels 38 such that between any pair of adjacent upper surface segments 36 there is a respective drainage channel 38. The drainage channels are open to the upper surface and slope downwardly from an upper point 40 provided as a ridge running in the longitudinal direction, to each of a pair of lower points 42, 44 at a respective edge of a panel.

Each upper surface segment, as seen in Fig 4, is convex in profile, and more particularly, the upper surface segments are convex along both the transverse and longitudinal axes (as defined previously) such that the upper surface segments have a domed profile. Waste is therefore encouraged to drain from the convex upper surface profiles either via an edge of the mat directly, or via a drainage channel.

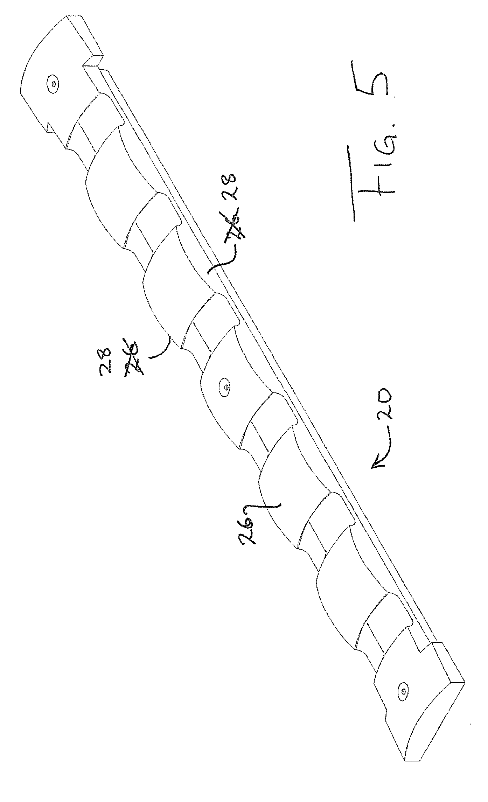

Fig 5 shows a variant, where the mat 20 is provided as a single panel 26 with a pair of outer edges 28 and no internal slot, void or hole. This mate is designed to overlay a single slat, and to define a gap along the elongate edges 28 in combination with a corresponding edge of an adjacent mat in the transverse direction.

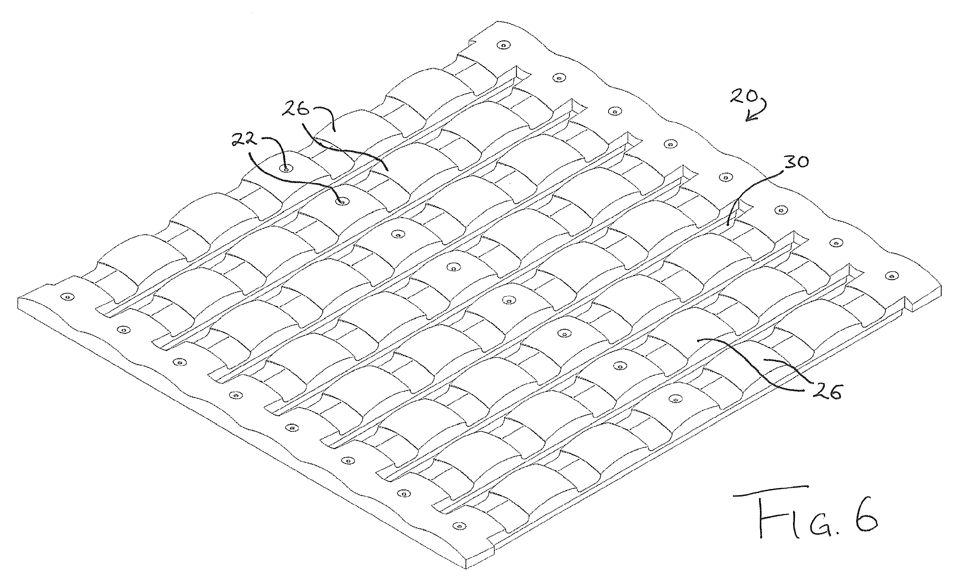

Fig 6 shows a further variant, in which the mat is provided in an extended format, with eight parallel panels 26. While these have generally the same upper surface arrangement as in the mat of Figs 1-4, there is no bridging portion 32, so that the internal slots 30 run along the full length of the panels in the longitudinal direction. Additionally, a further fastener 22 is provided at the midpoint of each panel in order to better secure the mat to the underlying slats.

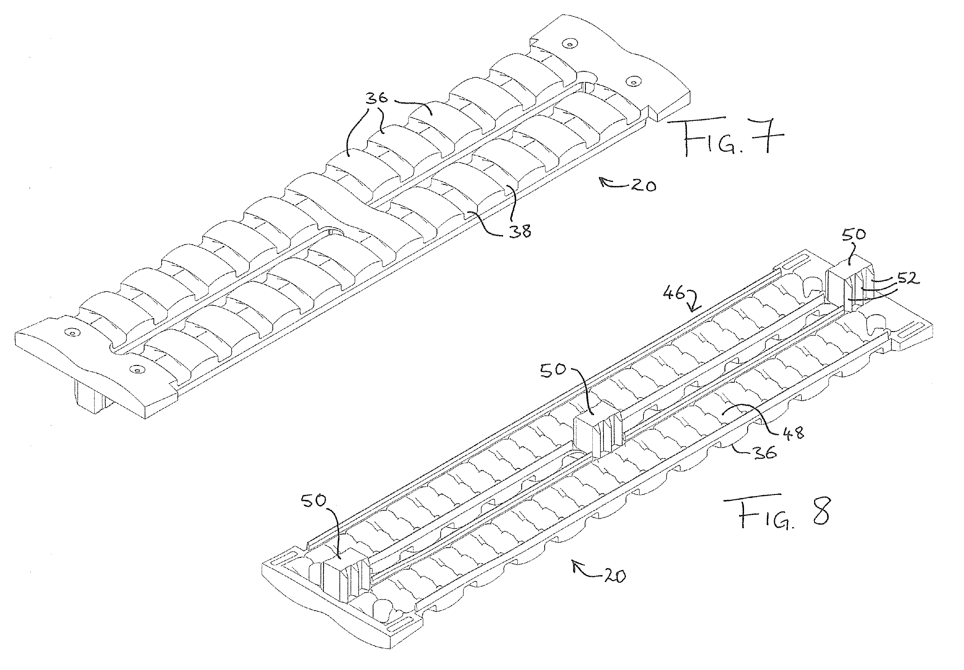

Fig 7 shows a variant in which the larger domed upper surface sections of the Fig format have been replaced with narrower (in the longitudinal direction) upper surface segments 26. Additionally, the width of the drainage channels 38 has also been reduced.

Fig 8 shows the underside or lower surface 46 of the mat 20 of Fig 7. It can be seen that the profile of the mat is not solid along the panels, but rather there are voids 48 formed below the upper surface.

Also visible in Fig 8 are a series of three wedges 50 in the form of rubber blocks having resilient ribs 52 which are deformed by being pushed between a pair of slats and thereby assist in holding the mat in position.

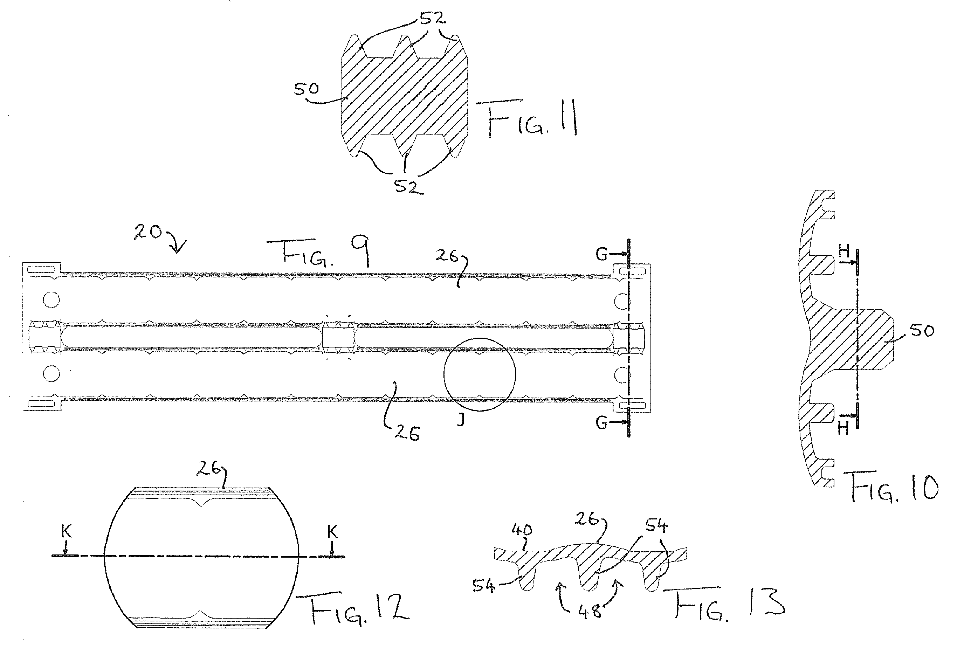

Figs 9-13 provide additional detail on the structure of the mat. Thus, Fig 9 shows the mat in plan view from below. Fig 10 shows a cross section through the mat, taken along the line G-G in Fig 9. Fig 11 is a section through the wedge 50, taken along the line H-H in Fig 10. Fig 12 is an enlarged detail of a portion of a panel 26, taken from the circle J in Fig 9. Fig 13 is a section through the centre line of the panel 26 (i.e. along the ridge 40) and showing the hollows or voids 48 in the underside, as well as supporting ribs 54 which provide the required amount of support and resilience to the mat such that it can bear an animal's weight while yielding somewhat to provide a cushioned surface.

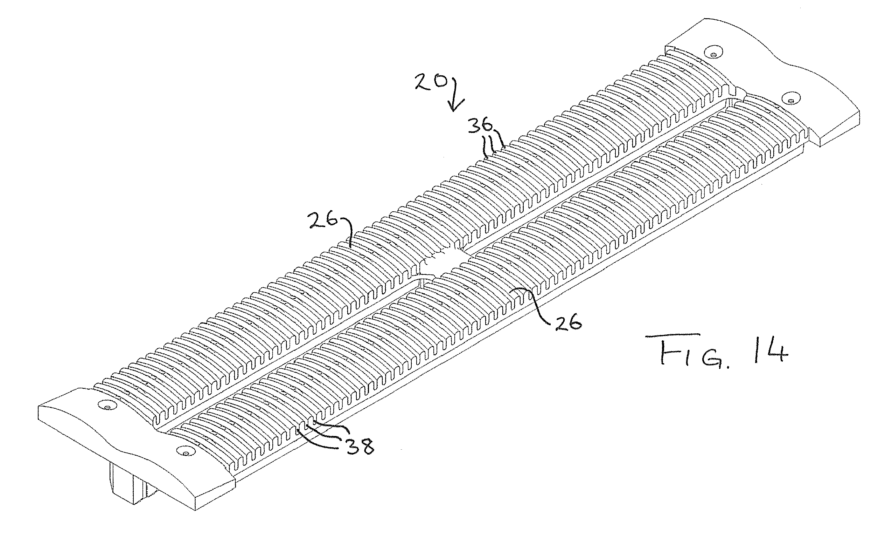

Fig 14 is an example of another mat 20 having a pair of panels 26, but for which the upper surface segments 26 are very narrow, as are the drainage channels 38.

For illustrative purposes, in the mat of Fig. 14 the width of each upper surface segment 36 in the longitudinal direction is 8mm, while the width of the drainage channels 38 are each 5mm. The transverse width of each panel is 85mm. The mat has a length in the longitudinal direction of 1,000mm.

In contrast, the mat of Figs 1- 4 has upper surface segments with a width in the longitudinal direction of 100mm and drainage channels having a width in the longitudinal direction of 50mm. The mat of Figs 7-13 has upper surface segments of 50mm width in the longitudinal direction and drainage channels of 25mm width in the longitudinal direction.

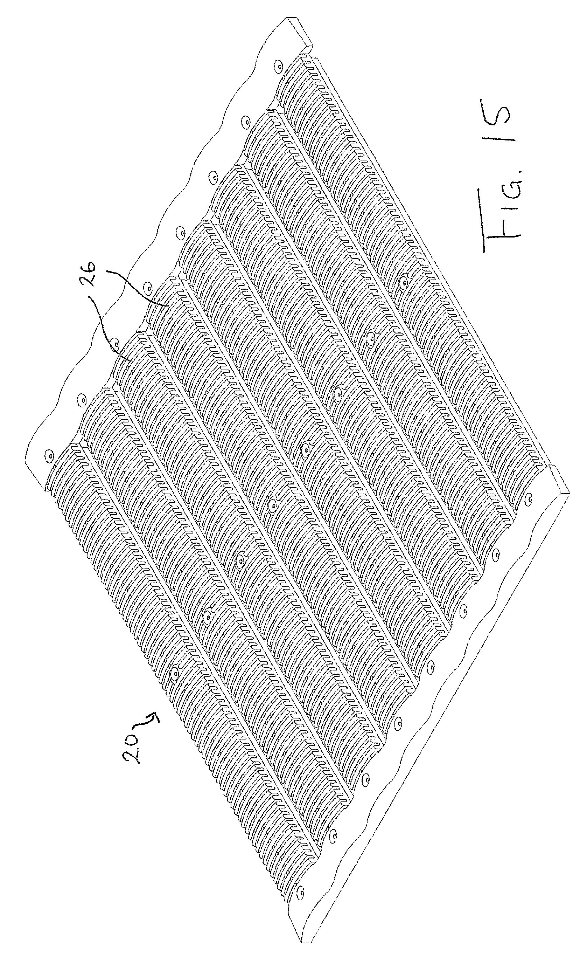

Fig 15 is a perspective view of a mat having individual panels designed similarly to Fig 14, but with eight panels 26 per mat, rather than two.

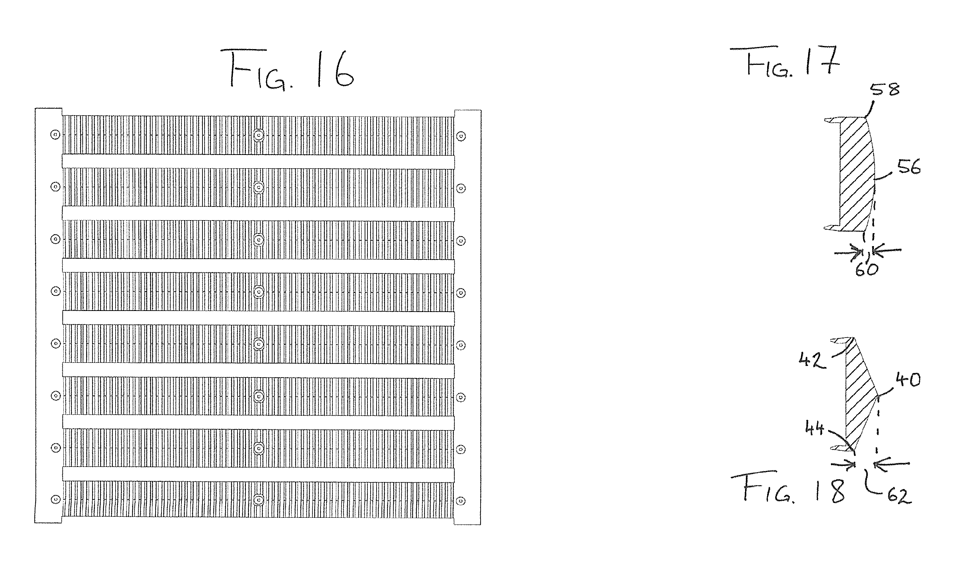

Referring to Fig 16 the same mat is shown in a top plan view, and Figs 17 and 18 respectively show cross sections through a domed upper surface segment at its midpoint, and through a drainage channel, respectively.

In Fig 17, it can be seen that the domed profile drops away from an apex 56 to a respective corner 58 at each edge. The fall, indicated as the dimension 60 in Fig 17, is 7mm. Given that the width of the panel is 85mm, this 7mm fall represents an aggregate fall of 7mm in 42.5mm (half rib or half panel width), or approximately a one in six or approximately 15.5% fall.

Referring to Fig 18, the drop along the drainage channel from the upper point 40 to the lower points 42,44, as indicated by the dimension 62, is 18mm. Since this fall occurs over the half width of a rib or panel, the corresponding slope is approximately 23 degrees.

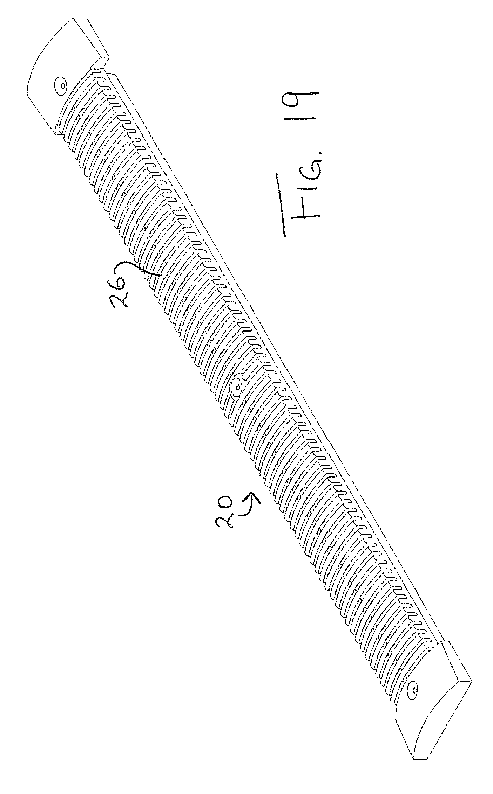

Fig 19 is a further variant of a mat, with an upper surface similarly proportioned to the mats shown in Fig 14 and Figs 15 - 18, but with a single panel 26.

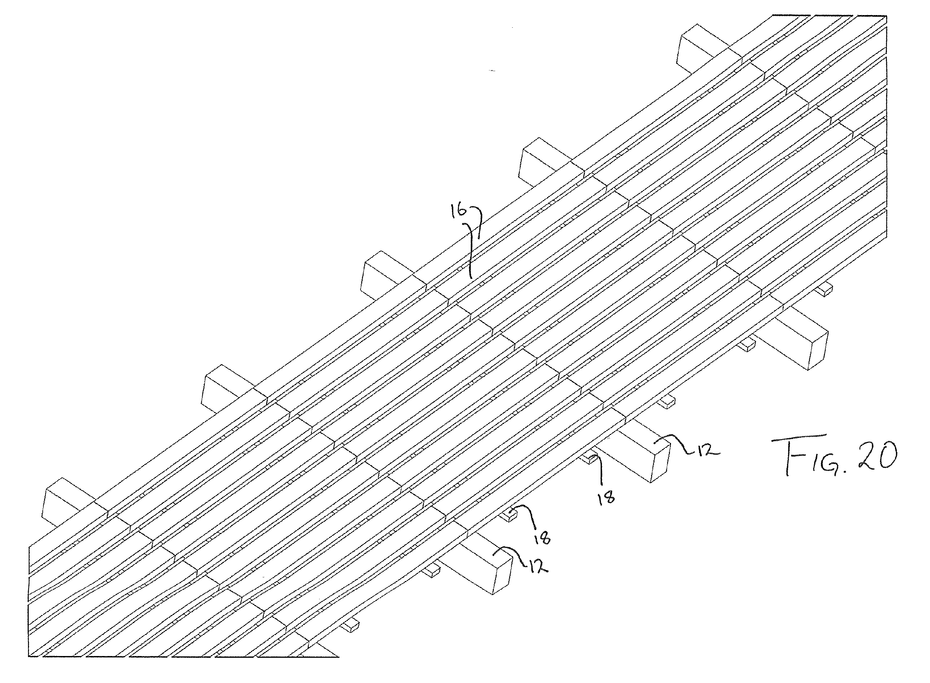

Fig 20 is a view of the slatted floor without any mats applied. It can be seen that when viewed from above, the floor has several visible upper surfaces on which waste could lodge. There is the upper surface of the slats themselves, the upper surface of the underfloor transverse beams 12, and the upper surfaces of the transverse tie members 18 which are visible between the slats. Referring back to Fig 1 it can be seen that the mat shown in that embodiment completely covers the slats and the surfaces of the underfloor transverse beams 12, but the gaps within and between mats reveal, in places, the top surfaces of the transverse tie members 18. Accordingly, waste falling into the slots or the gaps between mats can lodge on these transverse tie members 18, which is disadvantageous.

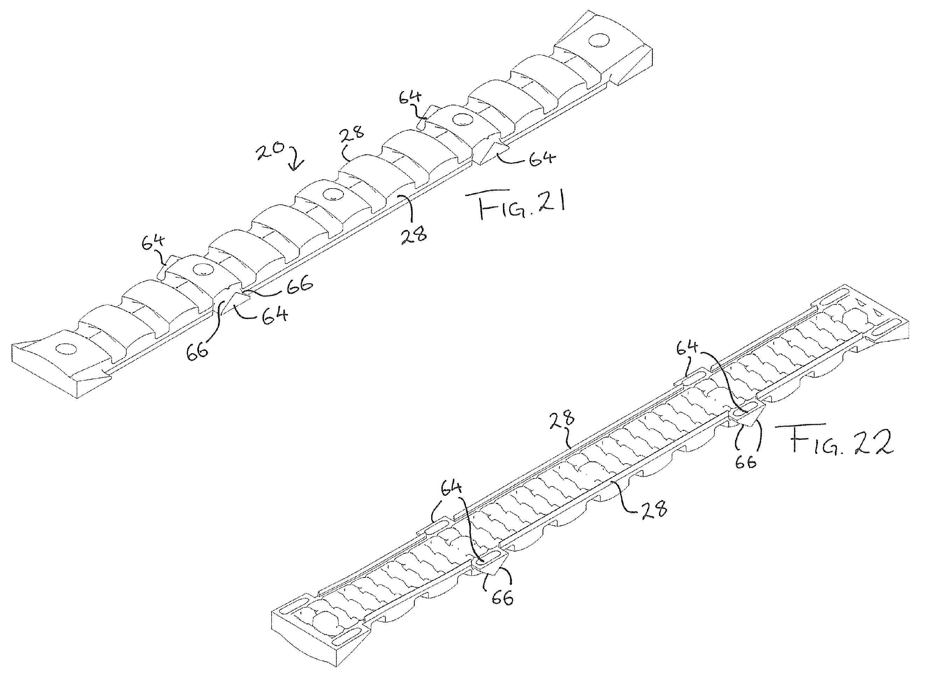

Figs 21 and 22 illustrate (from above and below respectively) a mat designed to overcome this drawback. The mat 20 is designed similarly to previous mates in terms of its upper surface, but with a number of transverse projections 64 along the respective longitudinal edges 28. The projections 64 have sloped upper surfaces (they could also be convex, vaulted, domed, etc.) such that waste which falls on the upper surfaces 66 is encouraged to drain off. The upper surfaces 66 are dimensioned and positioned along the edge 28 so that I use they will overlay the transverse tie members 18 of the slatted floor, and with such a mat, when the floor is fully covered by adjacent mats, no part of the slatted floor surface is visible from above. Two transversely abutting or adjacent mats will have abutting or adjacent projections forming a continuous or nearly continuous sloped upper surface.

Additionally, it will be observed that the entire floor, when tiled with the mats of the invention, has a surface which is sloped or convex at every point to prevent waste lodging. The floor is nevertheless safe for animals to walk on as the dimensions of the upper surface segments and drainage channels, and the slope or convexity characteristics of the upper surface segments will be chosen taking into account the size of the animal's hoof and the walking and standing characteristics of the particular animal. Thus, which the mat of Figs 1-4 might be suitable for cattle with its large upper surface segments and relatively wide drainage channels, the mat of Fig 21 might be more suitable for calves or pigs, and at an extreme, the mat of Fig 19 might be suitable for young piglets or lambs.

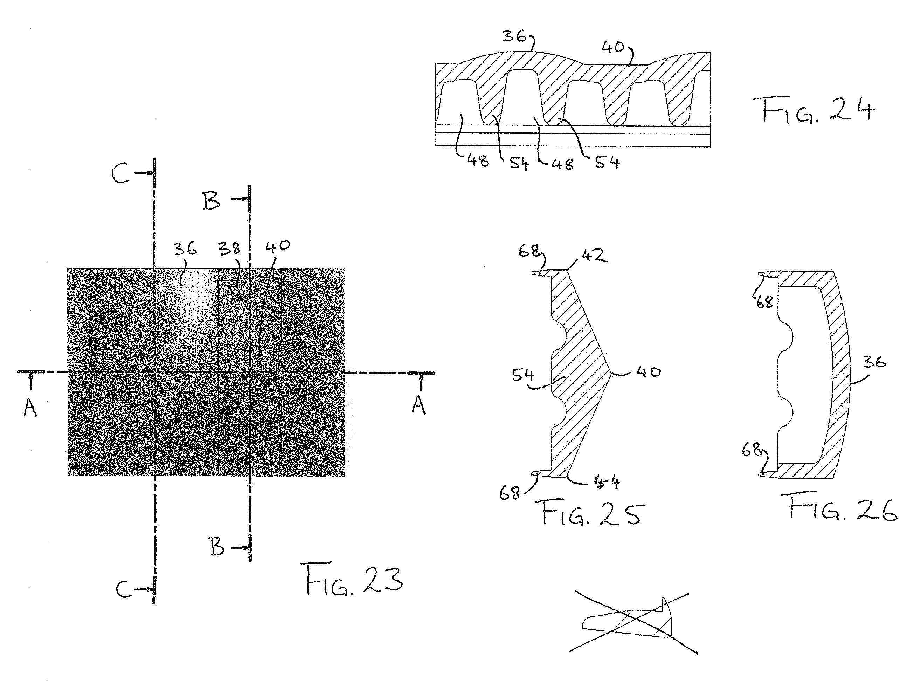

Figs 23 - 26 illustrate the internal structure or underside of a mat. Fig 23 shows the mat in plan view from above. Taking first the section along the line A-A, following the ridges 40, it can be seen that a series of hollows 48 are defined between ribs 54. Fig 25 is a cross section through one of the ribs 54, taken along the line B-B in Fig 23. Fig 26 is a cross section through the centre line of a domed upper surface segment, taken along the line C - C in Fig 23.

Also visible in Figs 25 and 26 is the existence of a lip 68 running along each edge of the panel designed to fit just outside the side edges of a slat. The lip 68 promotes runoff of waste draining from above and helps waste from seeping under the mat, i.e. between the slat and the mat.

Preferably the lip is of a shape and extends downwards by a sufficient amount to prevent such seepage. Many slats have a generally trapezoidal cross-section with a wider top surface, a narrower underside, and two sloping sides connecting these surfaces. Sometimes, however the sides drop off vertically for a short distance from the top surface before sloping inwards. In such cases it is preferred that the lip is at least as deep as the vertical part of the slat side, immediately adjoining the top surface.

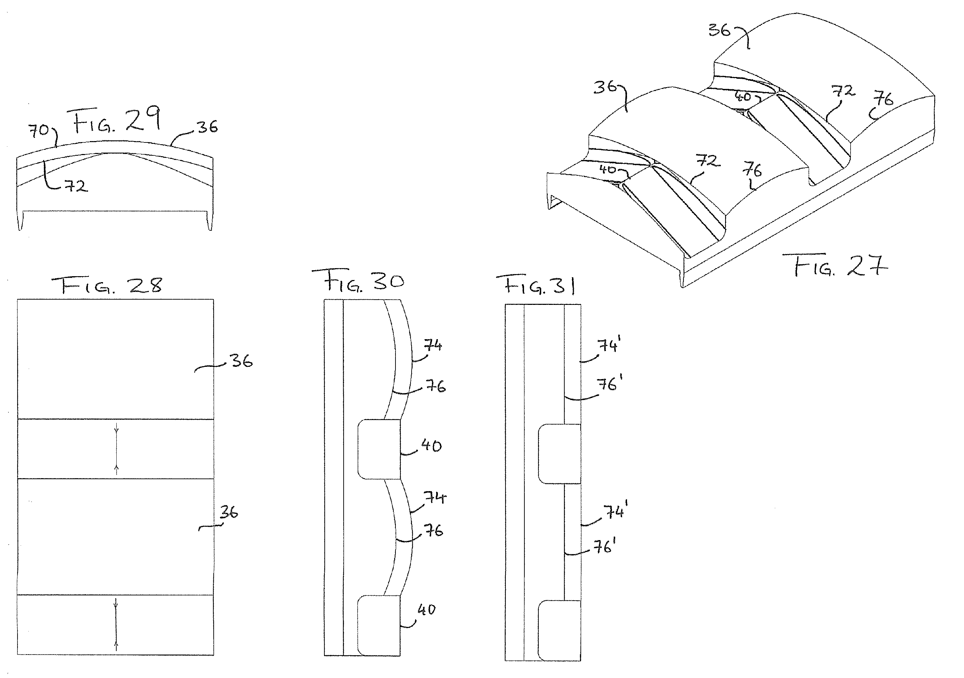

Figs 27 - 30 are a series of views of a portion of a mat, with Fig 31 being a variant.

As seen in the perspective view of Fig 27, the transverse end elevation of Fig 29 and the longitudinal side elevation of Fig 30, the upper surface segments 36 are convex in both directions. Thus, in Fig 29 one can see the line of the highest points 70 when the portion of the mat is viewed in transverse elevation, as well as the line of the edge 72 which extends across the width of the panel, with a fall-off between these two lines. Therefore, and as indicated by the curved edge 76, the surface is convex in the longitudinal direction. Similarly if one looks at Fig 30, showing the longitudinal side elevation, one can see the arcuate surface defined by the highest points along the centre line, as well as the lower edge 76. It is thus apparent from Fig 30 that the surface is convex in the transverse direction also, as also indicated by the curve of edge 72.

Fig 31 is a variant, in which the upper surface segments are convex only along the transverse axis and not along the longitudinal axis. Thus, while it can be seen that there is a falloff from the centre line of the upper surface segment 74' to edge 76', both of these lines are straight and there is no convexity along the longitudinal direction. Thus, the upper surface segments of Fig 31 have a vaulted shape but not a domed shape.

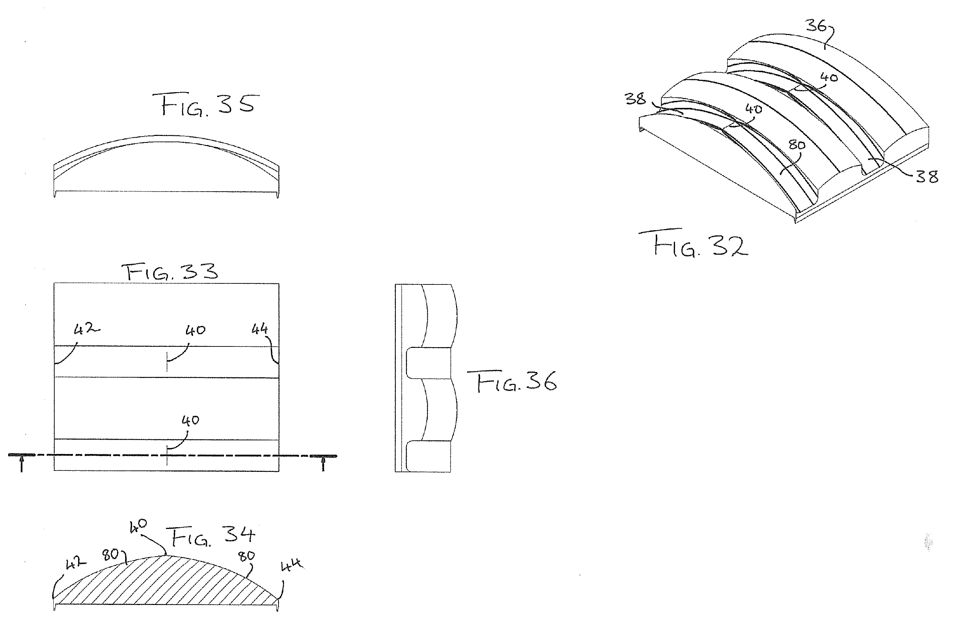

Figs 32-36 illustrate a further design of mat. The mat is shown in perspective in Fig 32, in plan view from above in Fig 33, in a cross sectional view in Fig 34 taken along the line A-A in Fig 33, and in an end elevation in Fig 35 showing the transverse profile of the portion of mat shown in Fig. 32. Fig 36 shows the mat in longitudinal side elevation.

The design of the mat is generally similar to that of Figs 27 - 30, albeit with narrower upper surface segments 36 and drainage channels 38. However, the mat differs from those seen previously in that the drainage channels do not have a flat slope, but rather have a curved profile, with a less pronounced ridge 40 sloping in a convex curve 80 (Fig 34) to the lower points 42,44.

## Claims

1. A mat for overlaying one or more elongate slats of a slatted floor of an animal house, the mat having an upper surface to bear the weight of an animal, a lower surface for overlaying the slatted floor, and a plurality of edges running along a lengthwise direction defined in use by the elongate direction of a slat on which the mat is to be laid, wherein the upper surface comprises a plurality of upper surface segments disposed at intervals along said lengthwise direction, wherein a plurality of drainage channels are provided between adjacent upper surface segments, said drainage channels being open to said upper surface and sloping downwardly towards an edge to assist in run-off of waste from the mat, and wherein said upper surface segments are provided with a convex profile such that waste is encouraged to drain from the convex upper surface profile via an edge of the mat either directly or via a drainage channel.

2. The mat according to claim 1, wherein said upper surface segments are convex along one axis, to provide a vaulted or arcuate profile.

3. The mat according to claim 1 or 2, wherein said upper surface segments are convex along a pair of generally orthogonal axes to provide a domed profile.

4. The mat of any preceding claim wherein the convex profile drops away from an apex to a mat edge with a fall of from 2mm to 50mm, more preferably from 4 to 40mm.

5. The mat of claim 4, wherein the convex profile drops away from an apex to each of a pair of mat edges on opposed sides of the apex, with a fall on either side of from 2mm to 50mm, more preferably from 4 to 40mm.

6. The mat of any preceding claim, wherein convex profile drops away from an apex to a mat edge with the profile making an angle at the mat edge of between 4° and 20° from horizontal in use.

7. The mat of any preceding claim wherein the convex profile drops away from an apex to a mat edge with an aggregate fall of between 6% and 40%.

8. The mat according to any preceding claim, wherein the convex profile is sloped to drain away from an upper point of the segment in a plurality of directions, including towards at least one edge and towards at least one drainage channel.

9. The mat according to any preceding claim, wherein the ratio of the width of a drainage channel to that of an adjacent upper surface segment, measured along the lengthwise direction of the mat, lies in the range 1:1 to 1:6.

10. The mat of any preceding claim, wherein said drainage channels extend between an upper point and a lower point when the mat is disposed in its use position, the upper points being at or below the upper surface of the mat, wherein the upper point of a drainage channel is located away from the edges of the mat and wherein the drainage channel slopes downwardly away from said upper point in the direction of an edge, such that there is a pair of said lower points, each associated with a respective edge.

11. The mat of claim 10, further comprising one or more internal edges defining a void, slot or hole through the mat, wherein at least a portion of said drainage channels have a lower point at said internal edge, and wherein the upper surface is separated by said void, slot or hole to have a plurality of upper surface segments on either side thereof.

12. The mat of any preceding claim, when provided in the form of at least two parallel elongated panels each having elongated outer edges, the panels being connected to one another in a spaced-apart configuration so as to define at least one elongated slot defined by one or more internal edges separating said panels, the panels being configured to overlay parallel slats of an underlying slatted floor, and the slot being configured to overlay a gap between said parallel slats and to allow material to flow from an upper surface of the mat through said slot and into said gap to a void below the floor.

13. The mat of any preceding claim, further comprising at least one transverse projection projecting from an outer elongate edge, said transverse projection having a convex or sloped upper surface encouraging waste which lands on said upper surface to drain therefrom.

14. The mat of claim 13, wherein said transverse projection extends outwardly from the edge of the mat by a distance of approximately half the distance between the adjacent outer edges of a pair of such mats when positioned on respective adjacent slats, whereby when a pair of such transverse projections are abutting or nearly abutting, the pair of projections present a continuous or near-continuous upper surface encouraging drainage of waste.

15. A slatted floor comprising a plurality of transverse cross members below a plurality of lengthwise slats, and at least one mat according to claim 13 or 14, wherein each of said projections overlies a respective cross member.
